# EUROPEAN PATENT SPECIFICATION

(11) **EP 1 641 140 B1**
(45) Date of publication and mention of the grant of the patent: **22.04.2009**
(21) Application number: 04746490.4
(22) Date of filing: 25.06.2004
(51) Int. Cl.: H04B 5/02, H04B 1/59, G06K 17/00, G06K 19/00

(54) **DATA COMMUNICATION DEVICE**
DATENKOMMUNIKATIONSEINRICHTUNG
DISPOSITIF DE COMMUNICATIONS DE DONNEES

(30) Priority: 30.06.2003 JP 2003188462
(43) Date of publication of application: 29.03.2006
(73) Proprietor: Sony Corporation, Tokyo 141-0001 (JP)
(72) Inventor: HARADA, Setsuo, Sony Corporation, Shinagawa-ku, Tokyo 141-0001 (JP); EZAKI, Tadashi, SONY CORPORATION, Shinagawa-ku, Tokyo 141-0001 (JP)
(74) Representative: Leppard, Andrew John
(86) International application number: PCT/JP2004/009021
(87) International publication number: WO 2005/002081

(56) References cited:
- EP-A- 1 308 886
- FR-A1- 2 724 274
- GB-A- 2 358 991
- JP-A- 8 268 536
- JP-A- 2000 242 755
- JP-A- 2000 278 170
- JP-A- 2002 236 901
- JP-A- 2002 342 720
- JP-A- 2003 037 861
- JP-A- 2003 060 748
- JP-A- 2003 150 916
- US-A1- 2002 084 938
- US-A1- 2002 183 094

## Description

### Technical Field

This invention relates to a data communication apparatus for non-contact data communication exploiting electromagnetic induction.

### Background Art

Recently, in the field of automatic ticket checkers or electronic money systems, a non-contact IC card is in use. This non-contact IC card includes, within the bulk of the card, an IC (integrated circuit) chip, composed of various electronic circuits, adapted for performing various processing operations for data write/readout, and a loop coil antenna, composed of a conductor wound in a flat configuration. The non-contact IC card exploits the a.c. voltage, induced in a loop coil antenna provided to the non-contact IC card, under an a.c. magnetic field of, for example, 13.56 MHz, generated in the loop coil antenna provided to a reader/writer adapted to write or read out data for the non-contact IC card, on the basis of the principle of electromagnetic induction, as a power supply for actuating an IC chip. Moreover, the non-contact IC card has non-contact data communication with the reader/writer by changing the load impedance.

Thus, with the present non-contact IC card, in which the power as needed is supplied from the reader/writer, there is no necessity of providing an internal power supply, such that the data write/readout operation may be carried out with ease speedily, simply by momentarily holding the card over the reader/writer.

Meanwhile, in view of user-friendliness of the non-contact IC card, it is now being contemplated to have the above-described non-contact IC card mounted on e.g. a portable device, such as a cellular phone, so that the portable device itself may serve as the non-contact device for wireless near-distance transmission, without the necessity for a user to carry about the card, as disclosed in the Japanese laid-Open Patent publication 11-213111.

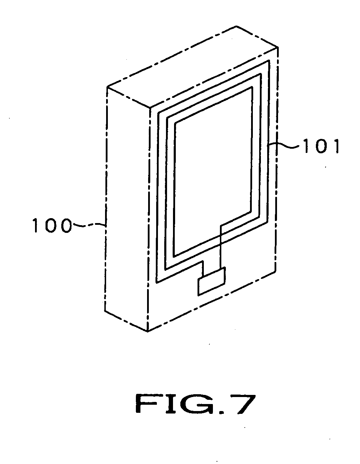

However, if, with the above-described data communication apparatus, the planar loop coil antenna 101, mounted on the non-contact IC card, is arranged in an enclosure 100 of a veritable thickness, such as the cellular phone schematically shown in Fig.7, sensitivity offset occurs across one of the major surfaces of the enclosure 100, in which the loop coil antenna 101 is arranged, and the other major surface, thus deteriorating the user friendliness. That is, if the planar loop coil antenna 101 is arranged within the inside of the enclosure 100, having the veritable thickness, such a problem is raised in which the sensitivity of the loop coil antenna 101 is changed with the orientation or the sensitivity area becomes smaller in size.

Thus, for equalizing the sensitivity of the loop coil antenna 101 across both major surfaces of the loop coil antenna 101, the planar loop coil antenna 101 must be arranged centrally in the enclosure 100. However, if, with the portable device, such as the aforementioned cellular phone, this planar loop coil antenna is arranged centrally in the enclosure, there is imposed significant mounting constraint.

Moreover, if, with the above-described loop coil antenna 101, the number of turns of the conductor is increased, the opening area of the loop coil antenna is decreased, thus narrowing down the area of sensitivity of communication with the reader/writer.

JP 2003 037861 A discloses a cabinet of a portable telephone set that is composed of resin and performs radio communication. In a part of the cabinet, for example in the resin of a cover for the battery compartment, a sealed antenna coil comprising a metal conductor wired in a coil shape and a non-contact type integrated circuit (IC) card function component are included. The IC card function component comprises an IC module which is electrically connected to the antenna coil. This allows for non-contact communication to be carried out using the portable telephone, without enlarging the main body of the portable telephone.

EP 1308886 A1 discloses a contactless transaction card that is detachably connectable to an antenna provided on a flexible film having an adhesive coating or other carrier surface. An integrated circuit chip on the contactless transaction card is electrically connected to the antenna. The cover of a mobile telephone could include a holder for the contactless transaction card and the antenna. The holder is configured so that when a contactless transaction card is inserted into the holder, the leads of the integrated circuit are facing the surface of the cover to enable electrical connection to be established between the contactless transaction card and the antenna. The cover is then attached to a mobile telephone such that the contactless transaction card can be used while it is contained within the mobile telephone. Thus, the necessity to carry a separate contact less transaction card is avoided.

JP 2002 236901 A discloses a portable telephone that is constructed to increase the communication distance of a contactless communication card contained within the portable telephone, for example a SIM card. An antenna is mounted on the SIM card that is used with a resonance circuit and an antenna mounted in the portable telephone. Thus, the SIM card can perform contactless communication over a longer distance.

### DISCLOSURE OF THE INVENTION

It is an object of the present invention to provide a data communication apparatus whereby it is possible to resolve the aforementioned problems inherent in the prior art.

According to the invention there is provided a data communication apparatus according to claim 1,

It is thus possible to provide a non-contact data communication apparatus in which the sensitivity of the loop coil antenna is equalized on both major surfaces of the enclosure, regardless of the thickness of the enclosure, and in which it is possible to enlarge the sensitivity area.

### EFFECT OF THE INVENTION

With the data communication apparatus, described above, in which the loop coil antenna is arranged with its conductor extending along the lateral side of the enclosure, the sensitivity of the loop coil antenna may be equalized in a direction along the thickness of the enclosure, thereby enlarging the area of communication sensitivity of the loop coil antenna.

Other objects and specified advantages of the present invention will become more apparent from the following explanation especially when read in conjunction with the drawings.

### BRIEF DESCRIPTION OF THE DRAWINGS

FIG. 1 is a schematic perspective view showing the structure of a cellular phone embodying the present invention.
FIG. 2 is a block diagram showing the structure of a semiconductor integrated circuit built into the cellular phone.
FIG. 3 is a perspective view showing the structure of a loop coil antenna arranged in the cellular phone.
FIG. 4 is a plan view showing the structure of the loop coil antenna and a flexible printed circuit board.

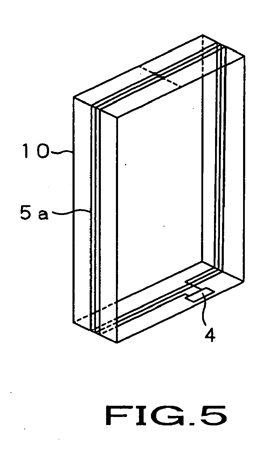

Fig.5 is a perspective view showing the state in which the loop coil antenna is formed by the flexible printed circuit board.
Fig.6 is a perspective view showing a modified structure of a loop coil antenna arranged in the cellular phone.
Fig.7 is a perspective view showing the structure of a conventional loop coil antenna.

### Best Mode for Carrying out the Invention

Referring now to the drawings, a data communication apparatus according to the present invention is explained in detail.

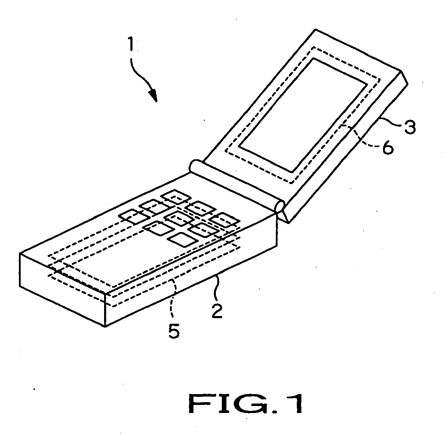

The data communication apparatus, embodying the present invention, is a cellular phone 1, having a non-contact IC card function and a reader/writer function, in addition to the conventional phone function, as shown for example in Fig. 1. This cellular phone 1 is of such a structure having a display part 3 mounted for opening/closure to a main body part 2.

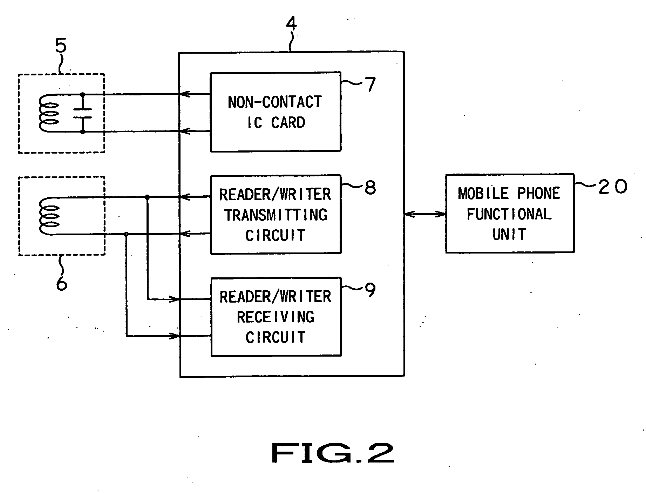

Referring to Figs.1 and 2, a semiconductor integrated circuit 4 (IC), having a non-contact IC card function and a reader/writer function, a loop coil antenna 5 on the non-contact card side, and a loop coil antenna 6 on the reader/writer side, are built in the cellular phone 1. The loop coil antennas 5, 6 are electrically connected to the semiconductor integrated circuit 4. Of these, the loop coil antenna 5 of the non-contact card side is arranged in an enclosure of the main body part 2, while the loop coil antenna 6 of the reader/writer side is arranged in an enclosure of the display part 3.

The semiconductor integrated circuit 4 includes a non-contact IC card 7, for which data is written and read out by an exterior reader/writer, not shown, a reader/writer transmitting circuit 8 for writing data on an exterior non-contact IC card, and a reader/writer receiving circuit 9 for reading out data from the exterior non-contact IC card. To this semiconductor integrated circuit 4, there is also electrically connected a cellular phone function unit 20 for implementing the call or communication function of the cellular phone 1.

On receipt of an electromagnetic wave, as a query signal, sent out via loop coil antenna 6 on the reader/writer side, over the loop coil antenna 5, the non-contact IC card 7 rectifies the carrier of the electromagnetic wave to convert it into a d.c. supply power, which drives an internal circuit, not shown. The non-contact IC card 7 also executes amplitude modulation, as the IC card changes the load between it and the exterior reader/writer side loop coil antenna, responsive to the query signal, to send a reply signal through the loop coil antenna 6 to the exterior reader/writer.

The reader/writer transmitting circuit 8 modulates the carrier for transmission, responsive to data for transmission, to send the query signal through the loop coil antenna 6 to the non-contact IC card. The reader/writer receiving circuit 9 receives a reply signal, sent from the exterior non-contact IC card, over the loop coil antenna 6, and demodulates the signal to acquire received data.

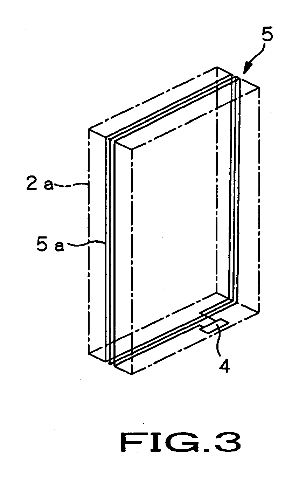

The non-contact IC card side loop coil antenna 5 is arranged so that its conductor 5a extends along the entire inner peripheral surface of an enclosure 2a of the main body part 2, as shown in Figs.1 and 3. This enables the sensitivity of the loop coil antenna 5 to be equalized along the thickness of the enclosure 2a, without dependency on the thickness of the enclosure 2a.

This loop coil antenna 5 has a three-dimensional shape by the conductor 5a being wound spirally along the inner lateral surface of the enclosure 2a. In this case, a large opening area of the loop coil antenna 5 may be provided without dependency on the number of turns of the winding of the conductor 5a, thus appreciably enlarging the area of sensitivity for communication with the reader/writer, as compared to a conventional loop coil antenna 101 shown in Fig.7.

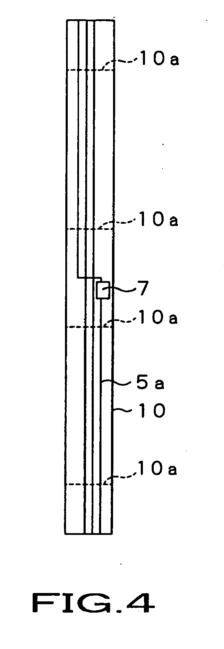

The loop coil antenna 5, having this three-dimensional shape, may readily be produced using a flexible printed circuit board shown in Fig.4. Specifically, the flexible printed circuit board 10 is a flexible elongated insulating substrate or film of, for example, polyimide. The conductor 5a is formed on the major surface of the flexible printed circuit board 10 as a plural number of linear copper foil patterns arrayed in a direction perpendicular to the longitudinal direction of the substrate. This flexible printed circuit board 10 includes plural folding lines 10a in keeping with the corners of the inner lateral surface of the enclosure 2a. The forming positions of the folding lines 10a are optional.

This flexible printed circuit board 10 is bent along the folding lines 10a in the same direction and the longitudinal ends thereof are bonded together to form the flexible printed circuit board 10 in a tubular form. At this time, the one and the other ends of the neighboring patterns of the conductor 5a are severally interconnected to form a sole loop coil of the conductor wound spirally along the short side direction of the flexible printed circuit board 10. It is noted that both ends of the loop coil are electrically connected to the semiconductor integrated circuit 4 mounted on the flexible printed circuit board 10. The ends of the loop coil may also be connected to a substrate on which the semiconductor integrated circuit 4 is mounted e.g. by a wire.

The loop coil antenna 5, having the three-dimensional shape, may be produced extremely readily. This loop coil antenna 5 may readily be arranged along the lateral surface of the enclosure 2a. The loop coil antenna 5 is bonded to the lateral surface of the enclosure 2a using an adhesive or by plugging into a socket-like recess formed in the lateral surface of the enclosure 2a. The loop coil antenna 5 may also be secured by any other suitable methods as necessary.

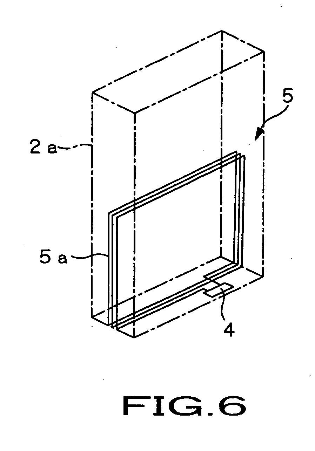

Meanwhile, the loop coil antenna 5 may also be arranged so that, instead of the conductor 5a being arranged on the entire periphery of the enclosure 2a, the conductor 5a is laid along a fraction of the lateral surface of the enclosure 2a, as shown for example in Fig.6.

The loop coil antenna 5 may be directly embedded in the lateral surface of the enclosure 2a of resin. Alternatively, the conductor 5a may be plated on the lateral surface of the resin enclosure 2a, to a preset pattern, or the conductor 5a may be arranged in a groove formed in the lateral surface of the enclosure 2a.

In the cellular phone 1, described above, in which the non-contact IC card side loop coil antenna 5 is arranged for extending along the lateral surface of the enclosure 2a of the main body part 2, it is possible to provide for approximately equalized sensitivity of the loop coil antenna 5 along the thickness of the enclosure 2a on both major surfaces of the main body part 2 to enlarge the sensitivity area of communication of the cellular phone 1 with the exterior reader/writer. Thus, with the present cellular phone 1, it is possible to obtain the sensitivity of the loop coil antenna 5 which is substantially equalized across both major surfaces of the main body part 2, so that the sensitivity area for communication may be enlarged to improve user friendliness further.

With the cellular phone 1, described above, the conductor provided to the reader/writer side loop coil antenna 6 is also of a three-dimensional shape, that is, may be arranged so that its conductor 5a extends along the lateral surface of the enclosure of the display part 3, as in the case of the non-contact IC card side loop coil antenna 5. Additionally, with the cellular phone 1, the non-contact IC card side loop coil antenna 5and the reader/writer side loop coil antenna 6 may be provided to the enclosure of the display part 3 and to the enclosure 2a of the main body part 2, respectively. Furthermore, with the cellular phone 1, both of the loop coil antennas 5, 6 may be provided to the enclosure of the main body part 2 or to the enclosure of the display part 3.

The data communication apparatus of the present invention is not limited to the cellular phone 1 and may be broadly applied to a non-contact device for wireless near-distance transmission carrying the aforementioned IC card function and/or the reader/writer function.

It should be noted that the present invention is not limited to the above embodiment described in the foregoing with reference to the drawings and, as may be apparent to those skilled in the art, various changes, substitutions or equivalents may be envisaged without departing from the scope of the invention.

### Industrial Applicability

With the data communication apparatus, according to the present invention, it is possible to obtain substantially equalized sensitivity of the loop coil antenna on both major surfaces of the enclosure having a veritable thickness, such that the sensitivity area which allows for communication may be enlarged, thus further improving the user friendliness.

## Claims

1. A data communication apparatus (1) comprising
an antenna for a cellular phone and a cellular phone functional part (20) for implementing the cellular phone function;
an enclosure (2) having first and second major surfaces interconnected by first, second, third and fourth lateral surfaces;
a first and a second loop coil antenna (5, 6) having a conductor arranged so that at least a portion of the conductor extends on the periphery of said enclosure (2); and
a semiconductor integrated circuit (4) connected to said loop coil antennas (5, 6), said semiconductor integrated circuit (4) having non-contact data communication over said loop coil antennas (5, 6) with an exterior communication device by using electromagnetic induction, wherein said semiconductor integrated circuit (4) has a non-contact IC card function (7) and a reader/writer function (8, 9), wherein each or said loop coil antennas (5, 6) is of a three-dimensional shape, with said conductor being mounted to extend spirally along at least three of the lateral surfaces of said enclosure so as to obtain substantially equalized sensitivity of the loop coil antennas (5, 6) on said first and second major surfaces of the enclosure;
wherein said first loop coil antenna (5) is electrically connected to a non-contact IC card part, implementing the non-contact IC card function of said semiconductor integrated circuit, and said second loop coil antenna (6) is electrically connected to a reader/writer circuit part, implementing the reader/writer function of said semiconductor integrated circuit, and wherein both of said first loop coil antenna (5) and the second loop coil antenna (6) are arranged on or in at least three of the lateral surfaces of said enclosure.

2. The data communication apparatus according to claim 1 wherein said conductor is arranged to extend along the entire periphery of said enclosure along all four of the lateral surfaces of said enclosure.

3. The data communication apparatus according to claim 1 wherein said conductor is arranged to extend along only a part of the periphery of the enclosure along only three of the lateral surfaces of the enclosure.

4. The data communication apparatus according to claim 1, 2 or 3 wherein said loop coil antenna is formed by a plurality of patterned linear copper foils on a major surface of a flexible insulating substrate, said linear copper foils extending along a longitudinal direction of said insulating substrate, said substrate being secured to at least three of the lateral surfaces of the enclosure.

5. The data communication apparatus according to claim 1, 2 or 3 wherein said loop coil antenna is embedded in said lateral surfaces of said enclosure.

6. The data communication apparatus according to claim 1 wherein said enclosure includes a main body part and a display part mounted for opening/closure relative to said main body part.

7. The data communication apparatus according to claim 6 wherein one of said first and second loop coil antennas is arranged in said main body part enclosure and the other of said first and second loop coil antennas is arranged in said display part enclosure.

8. The data communication apparatus according to claim 6 wherein both of said first and second loop coil antennas are arranged in said enclosure of said main body part.

9. The data communication apparatus according to claim 6 wherein both of said first and second loop coil antennas are arranged in said enclosure of said display part.

## Patentansprüche

1. Datenkommunikationsvorrichtung (1), welche umfasst:
eine Antenne für ein Zellulartelefon und ein Zellulartelefon-Funktionsteil (20) zum Ausführen der Zellulartelefonfunktion;
ein Gehäuse (2), welches erste und zweite Hauptflächen hat, welche über erste, zweite, dritte und vierte seitliche Flächen untereinander verbunden sind;
eine erste und eine zweite Rahmenantenne (5, 6), die einen Leiter haben, der derart angeordnet ist, das zumindest ein Teil des Leiters sich auf dem Umfang des Gehäuses (2) erstreckt; und
eine integrierte Halbleiterschaltung (4), welche mit den Rahmenantennen (5, 6) verbunden ist, wobei die integrierte Halbleiterschaltung (4) kontaktlose Datenkommunikation über die Rahmenantennen (5, 6) mit einer äußeren Kommunikationseinrichtung hat, wobei elektro-magnetische Induktion verwendet wird, wobei die integrierte Halbleiterschaltung (4) eine kontaktlose IC-Kartenfunktion (7) und eine Lesegeräte-/Schreibgerätefunktion (8, 9) hat, wobei jede der Rahmenantennen (5, 6) eine dreidimensionale Form hat, wobei der Leiter so befestigt ist, um sich spiralförmig längs zumindest von drei der seitlichen Flächen des Gehäuses zu erstrecken, um eine in etwa ausgeglichene Empfindlichkeit der Rahmenantennen (5, 6) auf den ersten und zweiten Hauptflächen des Gehäuses zu erlangen;
wobei die erste Rahmenantenne (5) elektrisch mit einem kontaktlosen IC-Kartenteil verbunden ist, wobei die kontaktlose IC-Kartenfunktion von der integrierten Halbleiterschaltung ausgeführt wird, und die zweite Rahmenantenne (6) elektrisch mit dem Lesegeräte-/Schreibgeräte-Schaltungsteil verbunden ist, wobei die Lesegeräte-/Schreibgerätefunktion von der integrierten Halbleiterschaltung ausgeführt wird, und wobei sowohl die erste Rahmenantenne (5) als auch die zweite Rahmenantenne (6) auf oder in zumindest drei der seitlichen Flächen des Gehäuses angeordnet ist.

2. Datenkommunikationsvorrichtung nach Anspruch 1, wobei der Leiter so angeordnet ist, um sich längs des gesamten Umfangs des Gehäuses längs aller vier der seitlichen Flächen des Gehäuses zu erstrecken.

3. Datenkommunikationsvorrichtung nach Anspruch 1, wobei der Leiter angeordnet ist, um sich lediglich längs eines Teils des Umfangs des Gehäuses längs lediglich drei der seitlichen Flächen des Gehäuses zu erstrecken.

4. Datenkommunikationsvorrichtung nach Anspruch 1, 2 oder 3, wobei die Rahmenantenne durch mehrere strukturierte geradlinige Kupferfolien auf einer Hauptfläche eines flexiblen Isolationssubstrats gebildet ist, wobei sich die geradlinigen Kupferfolien längs einer Längsrichtung des Isolationssubstrats erstrecken, wobei das Substrat an zumindest drei der seitlichen Flächen des Gehäuses gesichert ist.

5. Datenkommunikationsvorrichtung nach Anspruch 1, 2 oder 3, wobei die Rahmenantenne in den seitlichen Flächen des Gehäuses eingebettet ist.

6. Datenkommunikationsvorrichtung nach Anspruch 1, wobei das Gehäuse ein Hauptkörperteil und ein Anzeigeteil aufweist, das zum Öffnen/Verschließen in Bezug auf das Hauptkörperteil angebracht ist.

7. Datenkommunikationsvorrichtung nach Anspruch 6, wobei eine der ersten und zweiten Rahmenantennen im Hauptkörperteilgehäuse angeordnet ist, und die andere der ersten und zweiten Rahmenantennen im Anzeigeteilgehäuse angeordnet ist.

8. Datenkommunikationsvorrichtung nach Anspruch 6, wobei sowohl die ersten als auch die zweiten Rahmenantennen im Gehäusehauptkörperteil angeordnet sind.

9. Datenkommunikationsvorrichtung nach Anspruch 6, wobei sowohl die ersten als auch die zweiten Rahmenantennen im Gehäuse des Anzeigeteils angeordnet sind.

## Revendications

1. Appareil de communication de données (1) comportant
une antenne pour un téléphone cellulaire et une partie fonctionnelle de téléphone cellulaire (20) pour effectuer la fonction de téléphone cellulaire ;
une enceinte (2) possédant des première et seconde surfaces principales reliées par des première, seconde, troisième et quatrième surfaces latérales ;
une première et une seconde antenne hélicoïdale en boucle (5, 6) possédant un conducteur disposé de sorte qu'au moins une partie du conducteur s'étend sur la périphérie de ladite enceinte (2) ; et
un circuit intégré à semi-conducteurs (4) relié auxdites antennes hélicoïdales en boucle (5, 6), ledit circuit intégré à semi-conducteurs (4) présentant une communication de données sans contact par l'intermédiaires desdites antennes hélicoïdales en boucle (5, 6) avec un dispositif de communication extérieur en utilisant l'induction électromagnétique, dans lequel ledit circuit intégré à semi-conducteurs (4) possède une fonction de carte à puce sans contact (7) et une fonction de lecture/écriture (8, 9), dans lequel chacune ou lesdites antennes hélicoïdales en boucle (5, 6) sont de forme tridimensionnelle, ledit conducteur étant monté pour s'étendre en spirale le long d'au moins trois des surfaces latérales de ladite enceinte de manière à obtenir une sensibilité sensiblement égale des antennes hélicoïdales en boucle (5, 6) sur lesdites première et seconde surfaces principales de l'enceinte ;
ladite première antenne hélicoïdale en boucle (5) est reliée électriquement à la partie de carte à puce sans contact, réalisant la fonction de carte à puce sans contact dudit circuit intégré à semi-conducteurs, et ladite seconde antenne hélicoïdale en boucle (6) est électriquement reliée à une partie de circuit de lecture/écriture, réalisant la fonction de lecture/écriture dudit circuit intégré à semi-conducteurs, et dans lequel à la fois ladite première antenne hélicoïdale en boucle (5) et la seconde antenne hélicoïdale en boucle (6) sont disposées sur ou dans au moins trois des surfaces latérales de ladite enceinte.

2. Appareil de communication de données selon la revendication 1 dans lequel ledit conducteur est disposé pour s'étendre le long de toute la périphérie de ladite enceinte le long de l'ensemble des quatre surfaces latérales de ladite enceinte.

3. Appareil de communication de données selon la revendication 1 dans lequel ledit conducteur est agencé pour s'étendre uniquement le long d'une partie de la périphérie de l'enceinte seulement le long de trois des surfaces latérales de l'enceinte.

4. Appareil de communication de données selon la revendication 1, 2 ou 3 dans lequel ladite antenne hélicoïdale en boucle est formée par une pluralité de feuilles de cuivre linéaires à motifs sur une surface principale d'un substrat isolant flexible, lesdites feuilles de cuivre linéaires s'étendant le long d'une direction longitudinale dudit substrat isolant, ledit substrat étant fixé sur au moins trois des surfaces latérales de l'enceinte.

5. Appareil de communication de données selon la revendication 1, 2 ou 3, dans lequel ladite antenne hélicoïdale en boucle est noyée dans lesdites surfaces latérales de ladite enceinte.

6. Appareil de communication de données selon la revendication 1 dans lequel ladite enceinte comprend une partie de corps principal et une partie d'affichage montée pour une ouverture/fermeture par rapport à ladite partie de corps principal.

7. Appareil de communication de données selon la revendication 6, dans lequel une desdites première et seconde antennes hélicoïdales en boucle est agencée dans l'enceinte de ladite partie de corps principal et l'autre desdites première et seconde antennes hélicoïdales en boucle est disposée dans ladite enceinte de la partie d'affichage.

8. Appareil de communication de données selon la revendication 6, dans lequel à la fois lesdites première et seconde antennes hélicoïdales en boucle sont agencées dans ladite enceinte de ladite partie de corps principal.

9. Appareil de communication de données selon la revendication 6, dans lequel à la fois lesdites première et seconde antennes hélicoïdales en boucle sont agencées dans ladite enceinte de ladite partie d'affichage.
